# EUROPEAN PATENT APPLICATION

(11) **EP 4 215 869 A1**
(43) Date of publication of application: **26.07.2023**
(21) Application number: 22382037.4
(22) Date of filing: 21.01.2022
(51) Int. Cl.: G01B 5/00, G01B 21/04

(54) **STRUCTURAL SYSTEM DESIGN FOR THE VERIFICATION AND CALIBRATION OF MEASURING INSTRUMENTS**

(71) Applicant: Fundación Tekniker, 20600 Eibar (Guipuzcoa) (ES)
(72) Inventor: Arizaga Gurruchaga, Iñigo, 20600 Eibar(Guipúzcoa) (ES); Mutilba Larrea, Unai, 20600 Eibar(Guipúzcoa) (ES); Cortaberria Berriozabal, Gorka, 20600 Eibar(Guipúzcoa) (ES)
(74) Representative: Carlos Hernando, Borja

(57) **Abstract**

Structural system design for the verification and calibration of measuring instruments refers to a system or length artefact for the dimensional verification and calibration of measuring instruments, dimensional artefacts and standards. The structural system design comprises a) a support frame through which the load is transferred and b) a subsystem free of load that plays the role of a high-stable dimensional reference. In general terms, the present invention shall be used as a long-term stable structure, artefact or framework and it shall also be envisaged as a portable or large-scale structural system novel design principle.

## Description

### OBJECT OF THE INVENTION

The present invention, structural system design refers to a system for the verification and calibration of measuring instruments, and specifically, refers to a length artefact for the calibration of measuring instruments. The structural system design comprises a) a frame through which the load is transferred and b) a subsystem free of load that plays the role of a long-term dimensional reference. In general terms, the present invention shall be used as a long-term stable structure or framework, and it shall also be envisaged as a portable or large-scale structural system design principle.

However, a specific field of application of this structural system design is dimensional metrology where the establishment of traceability frequently demands the use of calibrated length artefacts. In this way, the present invention refers to a dimensional artefact, in the sense of "material measure" that can be used as a measurement standard to establish traceability to the dimensional measurements performed by those measuring instruments to be verified or calibrated.

A "material measure" is defined in the International Vocabulary of Metrology (VIM) as a "measuring instrument reproducing or supplying, in a permanent manner during its use, quantities of one or more given kinds, each with an assigned quantity value", playing the role of a measurement standard which is defined at VIM as the "realization of the definition of a given quantity, with stated quantity value and associated measurement uncertainty, used as a reference".

The present invention shall be used to perform a verification/calibration on the measuring instrument, where calibration is defined at VIM as "operation performed on a measuring instrument that establishes a relation between the values with measurement uncertainties provided by measurement standards and corresponding indications with associated measurement uncertainties and uses this information to a relation for obtaining a measurement result from an indication". Whereas verification according to VIM is defined as the provision of objective evidence that a given item fulfils specified requirements, in this case, shall it be a confirmation that a given reference material as claimed is homogeneous for the value and measurement procedure concerned.

The length artefact consists of a structure, and on its ends, it has the supports or holding elements for the arrangement of the fibre thread that plays the role of the so-called "material measure" as well as the nests employed to place the targets or define the touching points of the measuring instrument under verification/calibration. Considering its use, it shall be placed with multiple orientations in space to form a full 1D, 2D or 3D artefact. In the cases where the length of the dimensional artefact is important for its application, the recommended re-calibration periods should take into account prior knowledge about the long-term stability of its material.

The field of application of the present invention is framed within the field of precision engineering, metrology and dimensional calibration.

### BACKGROUND

In general, high geometric accuracy and large-scale stable structures can only be realised over lengths up to a few metres due to limitations in terms of manufacturing, geometric characterization and manipulation. From here on, large-scale structures are often realized by combining smaller structures placed together which prevent the structure to be stable and deploy a high accuracy. It is the case of very large 1D sphere beam artefacts frequently used for the realization of the ISO 10360 Standard on the Coordinate Measuring Machine (CMM) calibration. In the case of 2D and 3D sphere artefacts, their realization is usually limited to small and medium-size calibration artefacts since they cannot be divided into smaller structures. Therefore, the design and development of a large-scale dimensional reference is very rarely economically feasible.

This kind of large-scale stable structure is demanded by large-scale coordinate metrology that deals with coordinate measurement tasks for objects in which the linear dimensions vary from one metre to hundreds of metres. Thus, the calibration of large-scale measuring systems, such as CMMs or machine tools, may require large artefacts that shall be traceable to the SI (International System of Units). As a reference, the "PTB's reference wall" with rod-shaped artefacts of up to 12 m in length, which was envisaged for testing and calibrating portable and large-scale 3D measuring systems. The test lengths are realised using thermally stable carbon fibre reinforced material and mounted on the wall, free of strain. In this way, ensuring the dimensional traceability of these large-scale dimensional artefacts become a challenge.

The traceability concept understood as "traceability to the SI" means "metrological traceability to a measurement unit of the International System of Units", is adopted as a cornerstone for manufacturing metrology, considering that traceable measurements provide the knowledge for correct decision making.

The documented unbroken chain of calibrations is often visualised by the so-called calibration pyramid, with the SI located at the top, followed by calibrations performed at national metrology institutes (NMIs), accredited calibration laboratories, and in-plant calibration laboratories, and finally by the manufacturing measurements and the manufacturing process control based on calibrated sensors, artefacts and measuring instruments, ensuring the traceability and comparability of measurement results. Usually, the measurement uncertainty and the number of calibrated measuring instruments or measurement standards are increased at every step going down the calibration pyramid.

While the definition of the unit of length is based on the fixed value of the speed of light in vacuum, the realization is done by using a recommended laser frequency in a vacuum environment. However, the dependence of interferometric length measurement on the refractive index of air is one of the main reasons for the application of suitable calibrated dimensional artefacts in laboratories and manufacturing process control nowadays. While the dimensions of materials used in length artefacts may vary, the most important limitation is temperature, because the length of the artefact changes with temperature variation according to the material-specific coefficient of thermal expansion (CTE). Other limitations on the stability of the length artefact values are its dependence on ambient pressure, its drift and the dependence on its mounting conditions.

The objective of the present invention is to realize a large scale and portable "material measure" that tackles those limitations and outperforms those linear dimension artefacts employed traditionally, such as gauge blocks, step gauges, interferometry or ball bars. Understanding linear dimension artefacts as those providing a reference length defined as the distance between two reference points.

### SUMMARY OF THE INVENTION

The object of the present invention is a structural system design for the calibration or performance verification of dimensional measuring instruments that comprises a) a frame through which the load is transferred and b) a subsystem free of load that plays the role of a long-term dimensional reference, according to claim 1.

A specific construction of the present invention is a length artefact for the calibration or performance verification of dimensional measuring instruments. Therefore, the present invention relates to a measurement standard, preferably portable, that permits realizing large-scale dimensional artefacts by tackling the main limitations of traditional length artefacts. Specifically, the length standard artefact includes a frame comprising
- A structure with an elongated body, a first and a second end,
- A first fibre support arranged at the first end of the structure,
- A second fibre support is arranged at the second end of the structure, and
- Tension means (preferably a spring), between the second fibre support and the second end of the structure, which allows the longitudinal movement of the second support concerning the second end of the structure to allow a fibre thread to play the role of the so-called "material measure", so that the subsystem free of load comprises said thread that runs, or extends, between the first fibre support and the second fibre support.
Further, the subsystem free of the load is a carbon fibre thread placed between the two ends of the structure.

The length artefact itself will be the carbon fibre thread, whose length can be determined accurately through a calibration process and due to its low coefficient of thermal expansion, nearly zero, it will not be affected by variations in temperature and humidity that may affect the calibration scenario. However, the fibre thread must be arranged on a support in a way that allows the fibre to be kept extended over its entire length. In the present invention, the ends of the fibre are arranged on supports which in turn are placed on the ends of the elongated structure, which is slightly longer than the length of the thread. Said supports are each arranged at one end of the structure. Specifically, one of the supports is fixed to the first end and the opposite support, the second support, is placed over the second end of the structure and connected to it through tension means, preferably a spring. Said tension means allow the movement of said second support concerning the said second end of the structure while maintaining the connection between both.

According to the above, the fibre thread extends over the elongated body of the structure fixed to the first and second fibre supports, being the second support capable of moving concerning the second end of the structure. All the components of the standard of the invention, except for the fibre thread, are made of materials that can be affected by variations in temperature and humidity conditions. These variations can make the dimensions of the components change slightly, but said changes will not affect the length of the fibre thread because the same will remain tense. After all, the second support is movable concerning the second end of the structure. This happens because the length between the two ends of the structure is larger than the length of the fibre thread keeping said thread always tense due to the action of the tension means.

If the distance between the two ends varies due to the dimensional changes of the components because of the environmental conditions, the tension means will absorb said changes to maintain the fibre thread tense.

Preferably, the second fibre support comprises a base, between the structure and the support, that rests on the second end of the structure and allows said second support to slide on said second end. To help the sliding of the second support, the second end of the structure comprises a metallic surface where the lower base of the second fibre support rests. Said second end can be metallic or comprise a metallic plate on the said end where the base of the support rests. Further, to assure the contact between the second support and the metallic surface of the second end, the lower base of said second support can comprise a magnet that will contribute to maintaining contact between said two components, the second support and the metallic surface of the second end, and at the same time allowing the sliding of the second support over the second end.

The first and second ends of the elongated body of the structure can comprise independent bodies coupled to the same or can be part of said structure. In case they are independent bodies, the coupling means, preferably screws, are used between the ends and the structure elongated body. Said independent bodies are preferably the first fibre support element coupled to one end of the elongated body, acting as the first end, and a metallic body, or a body of a different material with a metallic plate, coupled to an opposite end of the elongated body, acting as the second end.

The first fibre support, placed on the first end of the structure, preferably matches with the first end of the structure, so that said first support is the first end of the structure.

Additionally, the fibre supports can include clamping means to ensure the position of the fibre thread in the supports, preventing that the ends of the fibre thread move from their position. The ends of the fibre thread can be coupled to the supports in different ways and different clamping means can be used to guarantee said coupling.

Preferably, the elongated body is made of steel. The support bodies are preferably made of steel and the clamping means too. The material of the first end of the structure is preferably steel and the material of the second end of the structure is a metal such as steel, although other materials with a similar CTE could be used.

The system and artefact of the present invention are portable because they can be disassembled and transported or carried easily.

### DESCRIPTION OF THE FIGURES

To complete the description of the present invention and to facilitate the understanding of its features, a set of figures is included in the present specification as an integral part thereof.
Figure 1 shows a perspective view of the length standard of the invention.
Figure 2 shows a side view of the second end of the standard with the support element and the clamping element.
Figure 3 shows a section of figure 2.
Figure 4 shows a perspective view of the second end of the standard without the clamping element.
Figure 5 shows a perspective view of the second end of the standard with the clamping element.
Figure 6 shows a perspective view of the first end of the standard without the clamping element.
Figure 7 shows a perspective view of the first end of the standard with the clamping element.

### PREFERRED EMBODIMENTS

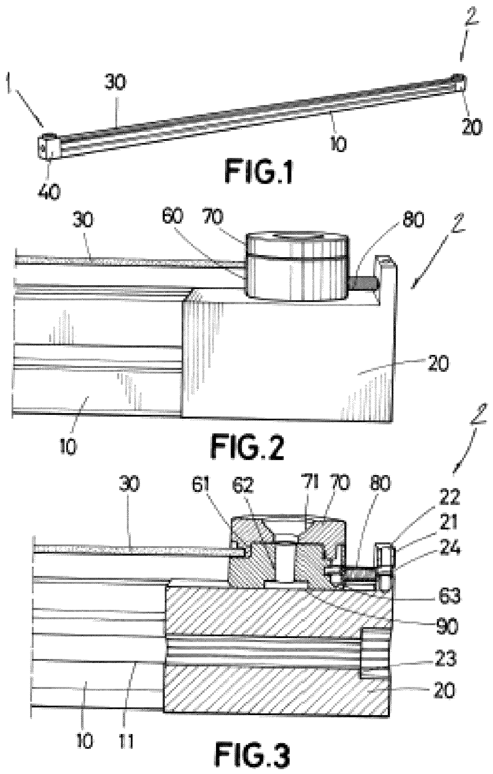

Figure 1 shows a perspective view of the system of the invention, specifically a length elongated structure (11), which comprises a frame (10) with two ends (1, 2) where preferably two fibre supports (40, 60)are placed, one on each end (1, 2) respectively. A fibre thread (30) extends between said two fibre supports (40, 60) on the two ends (1, 2) of the elongated structure (11). This fibre thread (30) marks the distance for the calibration, which length remains constant due to its low coefficient of thermal expansion which is nearly zero.

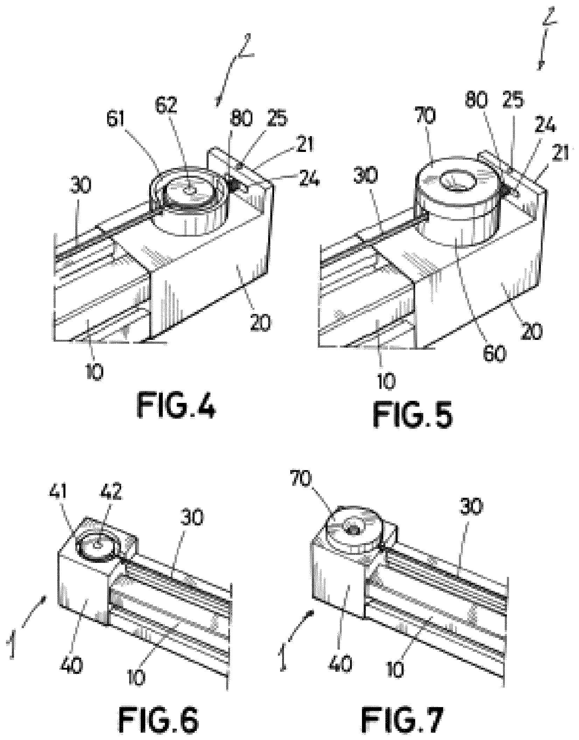

The first support (40) is preferably placed on a first independent body attached and fixed to the first end (1) of the frame (10) (Figs 6 and 7), and the second support (60) is connected to the second end (2) of the frame (10) through a second independent body (20), attached to said second end (2) of the structure (11) (Figs. 2 to 5). The second support (60) is connected to the second independent body (20) through an elastic tension element (80), preferably a spring or a similar element. Said first support (40) is preferably said first independent body.

If the frame (10) has a deformation due to environmental conditions, the fibre thread (30) remains with the same length and the tension element (80) acting as a tensor absorbs the deformation of said frame (10). The force made on the fibre thread (30) due to the deformation of the tension element (80) is considerably lower than the stiffness of the fibre thread (30).

Figure 2 shows a side view of the second end (2) of the elongated structure (11) with the second support (60) on the second independent body (20) on the second end (2) of the elongated structure (11). The second support (60) preferably comprises a clamping element (70) to ensure the position of the fibre thread (30) in the second support (60), preventing that the end of the fibre thread (30) moves from its position. The end of the fibre thread (30) can be coupled to the second support (60) in different ways and different clamping means can be used to guarantee said coupling. The second support (60) is attached to the second independent body (20) of the frame (10) through the tension element (80) acting as a tensor. The fibre thread (30) is therefore fixed on the second support (60) and this one is flexibly linked to the frame. The tension of this elastic and flexible link is always lower than the rigidity of the fibre thread (30). In the assembly, the tension element (80) must have some initial tension, so the fibre thread is tense from the start, to absorb the displacement in both directions of the possible elongation of the frame (10) due to temperature or humidity.

Preferably, the components of the frame (10), the first and the second independent bodies (40, 20) are made of steel. The second support (60) is preferably made of steel too as well as the coupling element (70). Other materials different to the steel but with a similar CTE could be used.

Figure 3 shows a section of figure 2. The fibre thread (30) is clamped to the second support (60) with the clamping element (70), acting as a cover, with an orifice (71). This clamping element (70) is coupled to the second support (60) with a screw that goes through the orifice (71) in the clamping element (70) and is screwed to the threaded orifice (62) in the second support (60). Said second support (60) comprises a groove (61) where the end of the fibre thread (30) is engaged. To ensure the position of the end of the fibre thread (30) in the second support (60), the clamping element (70) has a projection, complementary to the groove (61) that is introduced in the said groove (61) clamping the fibre thread (30) between the second support (60) and the clamping element (70).

The tension element (80) or spring is coupled to the second support (60) through one of its ends and to a protrusion (21) in the second independent body (20) through its opposite end. The ends of the tension element (80) are preferably fixed to the second support (60) and to the protrusion (21) with screws. In the protrusion (21) of the second independent body (20), there is a threaded hole (22) where a screw (25) is introduced to retain the end of the tension element (80) to the second independent body (20) of the frame (10). The screw (25) crosses through the end of said tension element (80) that is introduced in the protrusion (21) through an orifice or window (24). This window (24) allows slight lateral movements of the tension element (80) concerning the protrusion (21) of the second independent body (20) of the frame (10). A similar construction for allowing slight movements of the tension element (80) exists on the second support (60).

The second support (60) comprises a lower base that rests on a surface of the second independent body (20) comprising said base a fixing element, such as a magnet (90). Said magnet (90) joins the second support (60) with the second independent body (20) of the frame (10) but allowing said second support (60) to scroll along the direction of the tension of the fibre thread (30). The magnet (90) prevents the second support (60) from falling from the second independent body (20) if the system or elongated structure (11) is used vertically. The interface of the second support (60) with the second independent body (20) is made by a roulement so there is no friction force between the two, in case of displacement of the support (60). The material of the second independent body (20) should allow the attraction of the magnet (90).

The second independent body (20) is coupled to the frame (10) with a screw that first crosses said second independent body (20) through an orifice (23) and afterwards is introduced onto the frame (10).

Figure 4 shows a perspective view of the second support (60) on the second end (2) of the elongated structure (10) without the clamping element (70). The second support (60) with the groove (61) and the fibre thread (30) inside, as well as the tension member (80) coupled to the protrusion (21) through the window (24) with the screw (25), can be seen in said figure 4. Figure 5 shows a perspective view of the second support (60) on the second end (2) with the cover (70), which contributes to fix the fibre thread (30) to the second support (60).

Figures 6 and 7 show perspective views of the first end (1) of the artefact, without a clamping element (70) and with the clamping element (70) respectively. In this embodiment, in the first end (1) of the elongated structure (11), the first support of the fibre thread (30) is also the first independent body (40) of the first end (1) of the frame (10).

Anyway, an embodiment (not shown) of a support and independent body as the ones in the second end (2) of the frame (10) could be used too in the first end (1). In this alternative embodiment, a first support would be connected to a first independent body of the frame (10), being the first support and first independent body two separate elements.

In the embodiment shown in Figure 6, it can be seen how the first support (40) or first independent body comprises a groove (41) where the end of the fibre thread (30) is introduced. Afterwards, the clamping element (70) is placed on said first support (40) or first independent body and coupled to the same through a screw, crossing said clamping element (70), and introduced into an orifice (42) in said first support (40) or first independent body.

## Claims

1. A structural system design for the calibration of measuring instruments comprising:
a) a frame (10) through which a load is transferred, and
b) a subsystem (30) free of load that plays the role of a long-term dimensional reference.

2. The system, according to claim 1, **characterized in that** the frame (10) comprises:
- A structure (11) with an elongated body, with a first (1) and a second (2) end,
- A first fibre support (40) arranged at the first end (1) of the structure (11),
- A second fibre support (60) arranged at the second end (2) of the structure (11), and
- Tension means (80), between the second fibre support (60) and the second end (2) of the structure (11), which allow the longitudinal movement of the second support (60) concerning the second end (2) of the structure (11),
wherein the subsystem free of load (30) comprises a fibre thread (30) that runs between the first fibre support (40) and the second fibre support (60).

3. The system, according to claim 2, **characterized in that** the second support (60) comprises a lower base that rests and slides on the second end (2) of the structure (11).

4. The system, according to any of the preceding claims, **characterized in that** the second support (60) is connected to the second end (2) of the structure (11) through a second independent body (20) attached to said second end (2).

5. The system, according to any of the preceding claims, **characterized in that** the first support (40) is connected to the first end (1) of the structure (11) through a first independent body attached to said first end (1).

6. The system, according to claim 5, **characterized in that** the first support (40) is the first independent body.

7. The system, according to any of the preceding claims, **characterized in that** the second end (2) of the structure (11) comprises a metallic surface to support the second support (60).

8. The system, according to claim 3, is **characterized in that** said lower base comprises a magnet (90).

9. The system, according to any of the preceding claims, **characterized in that** it comprises coupling means between the first independent body (40) and the first end (1) of the structure (11).

10. The system, according to any of the preceding claims, **characterized in that** it comprises coupling means between the second independent body (20) and the second end (2) of the structure (11).

11. The system, according to any of the preceding claims, **characterized in that** it comprises clamping elements (70) to ensure the position of the fibre (30) in the first (40) and second (60) supports.

12. The system, according to any of the preceding claims, **characterized in that** the tension means (80) are a spring.

13. The system, according to claims 9 and 10, **characterized in that** the coupling means are screws.
